# EUROPEAN PATENT SPECIFICATION

(11) **EP 2 375 475 B1**
(45) Date of publication and mention of the grant of the patent: **14.11.2012**
(21) Application number: 11152639.8
(22) Date of filing: 31.01.2011
(51) Int. Cl.: H01M 10/052, H01M 2/26, H01M 2/34, H01M 10/0587, H01M 2/02, H01M 2/18

(54) **Rechargeable battery**
Wiederaufladbare Batterie
Batterie rechargeable

(30) Priority: 12.04.2010 US 282859 P; 06.07.2010 US 801967
(43) Date of publication of application: 12.10.2011
(73) Proprietor: SB LiMotive Co., Ltd., Yongin-si Gyeonggi-do (KR)
(72) Inventor: Kim, Sung-Bae, Yongin-si Gyeonggi-do 446-711 (KR); Kim, Yong-Sam, Yongin-si Gyeonggi-do 446-711 (KR); Byun, Sang-Won, Yongin-si Gyeonggi-do (KR)
(74) Representative: Gulde Hengelhaupt Ziebig & Schneider

(56) References cited:
- US-A1- 2006 024 578
- US-A1- 2007 196 729
- US-A1- 2008 038 627

## Description

### BACKGROUND OF THE INVENTION

### (a) Field of the Invention

The present invention relates to a rechargeable battery for controlling a position of an electrode assembly in a case.

### (b) Description of the Related Art

A rechargeable battery includes a jelly-roll-type electrode assembly having a separator and an anode and a cathode disposed at both sides of the separator, a case housing the electrode assembly, a cap plate sealing an opening of the case, an electrode terminal electrically connected to the electrode assembly and protruded outside the cap plate through a terminal hole formed on the cap plate, and a lead tab connecting the cathode and the anode of the electrode assembly to the electrode terminal, respectively.

The electrode assembly has an uncoated region connected to the lead tab, and it is inserted into the case through the opening. Therefore, there is a gap between the uncoated region of the electrode assembly and an inner wall of the case. The gap enables the electrode assembly to be freely inserted into the case, but it generates movement of the electrode assembly in the case after the insertion.

That is, when the gap between the uncoated region and the inner wall of the case is formed to be wide, insertion of the electrode assembly becomes easy, but durability to the vibration of the electrode assembly and an electric insulating property of the electrode assembly for the case are deteriorated because of movement of the electrode assembly in the case. On the contrary, when the same is formed to be narrow, insertion of the electrode assembly becomes difficult, but durability to the vibration and the electric insulating property of the electrode assembly can be improved. Therefore, it is needed to easily insert the electrode assembly into the case and improve the vibration durability and electric insulating property of the electrode assembly.

The above information disclosed in this Background section is only for enhancement of understanding of the background of the invention and therefore it may contain information that does not form the prior art that is already known in this country to a person of ordinary skill in the art.

The prior art is represented by US 2006/024578 or US 2008/038627.

### SUMMARY OF THE INVENTION

The present invention is defined in claim 1 and has been made in an effort to provide a rechargeable battery for improving vibration durability and electric insulating property of an electrode assembly by providing easy insertion of the electrode assembly and controlling a position of the electrode assembly in a case.

An exemplary embodiment of the present invention provides a rechargeable battery including: an electrode assembly formed by winding an anode and a cathode installed at both sides of a separator together with the separator; a case housing the electrode assembly; a cap plate closing and sealing an opening formed at an end of the case; an electrode terminal installed at a terminal hole of the cap plate and extended to the inside/outside of the case; a lead tab connecting the electrode terminal and the electrode assembly in the case; and a retainer interposed between the lead tab and the case and formed with an electric insulating material.

A further exemplary embodiment of the present invention provides a rechargeable battery comprising: at least one electrode assembly; a case accommodating the at least one electrode assembly, the case comprising a front surface, a rear surface and side surfaces; at least one electrode terminal being electrically connected to the at least one electrode assembly by at least one lead tab, wherein a retainer is joined to the at least one lead tab and disposed between the at least one lead tab and an inner wall of at least one of the front surface, the rear surface and the side surfaces of the case.

Preferably, the retainer directly contacts both, the inner wall of at least one of the front surface, the rear surface and the side surfaces of the case and the at least one lead tab.

Preferably, the retainer comprises an insulating material that electrically insulates the inner wall of the case from the lead tab. Preferably, the retainer is a monolithic unit formed of an insulating material.

Preferably, the electrode assembly comprises an anode, a cathode and a separator disposed therebetween, each of the anode and the cathode comprising a current collecting part comprising a coated region in which an active material is coated on the current collecting part, and an uncoated region in which no active material is coated on the current collecting part, and further comprising a first electrode terminal and a second electrode terminal are provided, wherein the first electrode terminal is directly connected to a first lead tab, and the first lead tab is directly connected to the uncoated region of the anode, wherein the second electrode terminal is directly connected to a second lead tab, and the second lead tab is directly connected to the uncoated region of the cathode, and wherein a first retainer is interposed between the first lead tab and an inner wall of the case and a second retainer is interposed between the second lead tab and an inner wall of the case.

Preferably, each of the at least one lead tab comprises a connector directly connected to the electrode terminal; a body connected to the connector and facing the end portion of the uncoated region of the electrode assembly; and a current collector connected to the body and welded to both sides of the uncoated region of the electrode assembly. Preferably, the retainer comprises a buffer attached to the body of the lead tab, a first hook connected to the buffer and hooked on the top of the body of the lead tab, and a second hook connected to the buffer and hooked on the bottom of the body of the lead tab. Preferably, the first hook is configured as a pair hooked on the top of the body of the lead tab at both bottom sides of the connector.

Preferably, each of the at least one lead tab comprises a connector directly connected to the electrode terminal; a body formed as a current collector and connected to the connector and being welded at the end portion of the uncoated region of the electrode assembly; and an installing hole formed in the current collector. Preferably, the retainer comprises a buffer attached to the current collector of the lead tab, a first hook connected to the buffer and hooked on a side portion of the current collector, and a second hook connected to the buffer and hooked in the installing hole of the current collector. Preferably, the first hook is configured as a pair hooked on the current collector at both sides of the current collector.

Preferably, a distance between opposite inner side walls of the case, which are in direct contact with the first retainer and the second retainer, respectively, is equal to the sum of the distances between a side portion of the uncoated region of the anode and a side portion of the uncoated region of the cathode, the thickness of the body of the first lead tab, the thickness of the body of the second lead tab, the thickness of the buffer of the first retainer and the thickness of the buffer of the second retainer.

Preferably, a first thickness of the retainer along a first direction extending from a first side surface of the case to a second side surface of the case is equal to a gap between the at least one lead tab and an inner wall of one of the side surfaces of the case. Preferably, a second thickness of the retainer along a second direction extending from the front surface of the case to the rear surface of the case is equal to a gap between the at least one lead tab and an inner wall of one of the front surface and the rear surface of the case.

Preferably, the rechargeable battery further comprises an additional buffer member formed of an elastic material between a buffer of each of the first and second retainer and the inside of the case, wherein a distance between opposite inner side walls of the case, which are in direct contact with the first retainer and the second retainer, respectively, is equal to the sum of the distances between a side portion of the uncoated region of the anode and a side portion of the uncoated region of the cathode, the thickness of the body of the first lead tab, the thickness of the body of the second lead tab, the thickness of the buffer of the first retainer and the thickness of the buffer of the second retainer, the thickness of the additional buffer member formed between the buffer of the first retainer the inside of the case and the thickness of the additional buffer member formed between the buffer of the second retainer the inside of the case.

Preferably, the electric insulating material has an electrical conductivity (at 20°C) of less than 10⁻⁴ S/m, more preferably less than 10⁻⁵ S/m, more preferably less than 10⁻⁶ S/m, more preferably less than 10⁻⁷ S/m, more preferably less than 10⁻⁸ S/m, more preferably less than 10⁻⁹ S/m, more preferably less than 10⁻¹⁰ S/m and still more preferably less than 10⁻¹¹ S/m.

Preferably the retainer is formed of a thermoplastic, but the invention is not limited thereto. Preferably the retainer is formed of polypropylene, but the invention is not limited thereto. Preferably the complete retainer is formed of polypropylene. Preferably the retainer is monolithically formed as one piece. That is, retainer is an integrally formed component.

Preferably, the hardness of the material used for the retainer, ranges between 10% and 1000%, more preferably between 50% and 500% of the hardness of polypropylene.

The material of the additional buffer member may be different from the other material of the (monolithic) retainer. That is, preferably the retainer is monolithic except the additional buffer member. Preferably, the elasticity of the material of the additional buffer member is greater than the elasticity of the material of the (residual) retainer.

According to an embodiment of the present invention, the position of the electrode assembly is fixed in the case without degrading easy insertion of the electrode assembly by providing a retainer of an electrical insulating material between the lead tab and the case. Therefore, durability to the vibration of the electrode assembly in the case is improved, and the electric insulating property between the case and the uncoated region is improved.

A further exemplary embodiment of the present invention provides a vehicle comprising the rechargeable battery according to at least one of the above-mentioned features.

### BRIEF DESCRIPTION OF THE DRAWINGS

FIG. 1 shows a perspective view of a rechargeable battery according to a first exemplary embodiment of the present invention.

FIG. 2 shows a cross-sectional view with respect to a II-II line in FIG. 1.

FIG. 3 shows an exploded perspective view of a retainer, a lead tab, and an electrode assembly.

FIG. 4 shows a cross-sectional view with respect to a IV-IV line in FIG. 3.

FIG. 5 shows a cross-sectional view with respect to a V-V line in FIG. 3.

FIG. 6 shows an exploded perspective view of a retainer, a lead tab, and an electrode assembly in a rechargeable battery according to a second exemplary embodiment of the present invention.

FIG. 7 shows a cross-sectional view with respect to a VII-VII line in FIG. 6.

FIG. 8 shows a cross-sectional view with respect to a VIII-VIII line in FIG. 6.

FIG. 9 shows a cross-sectional view of a rechargeable battery according to a third exemplary embodiment of the present invention.

Fig. 10 shows a schematic diagram of a vehicle including a rechargeable battery according to an embodiment of the present invention.

### DETAILED DESCRIPTION OF THE EMBODIMENTS

The present invention will be described more fully hereinafter with reference to the accompanying drawings, in which exemplary embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

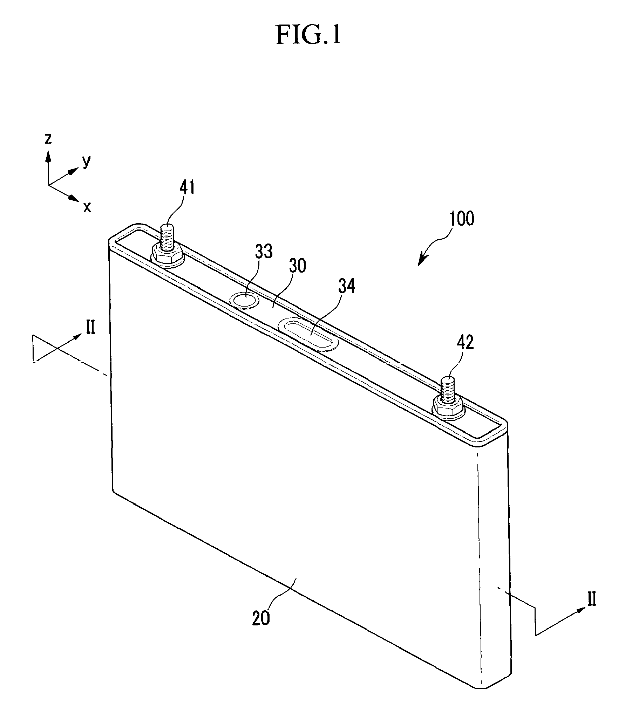

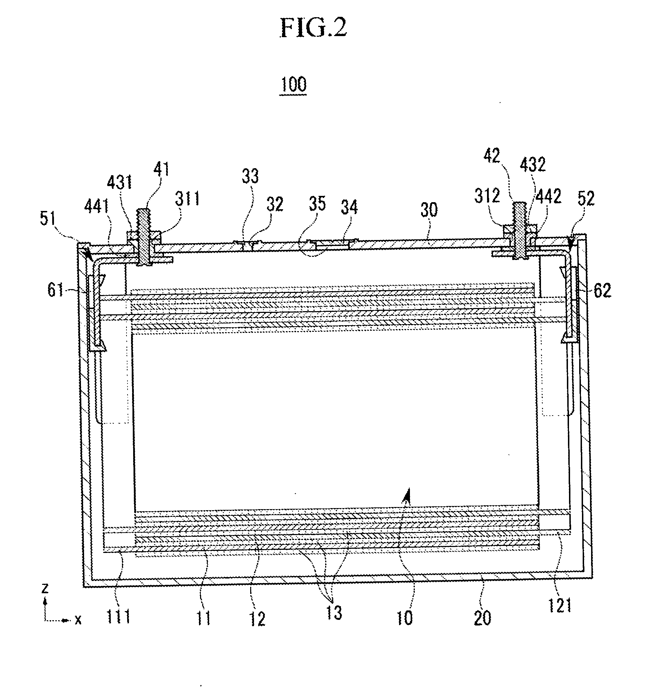

FIG. 1 shows a perspective view of a rechargeable battery according to a first exemplary embodiment of the present invention, and FIG. 2 shows a cross-sectional view with respect to a II-II line in FIG. 1. Referring to FIG. 1 and FIG. 2, a rechargeable battery 100 includes a case 20 having an electrode assembly 10, a cap plate 30 closing and sealing an opening formed at one end of the case 20, electrode terminals 41 and 42 installed in terminal holes 311 and 312 of the cap plate 30, lead tabs 51 and 52 connecting the electrode terminals 41 and 42 to the electrode assembly 10, and retainers 61 and 62 interposed between the lead tabs 51 and 52 and an inner wall of the case 20. Preferably, for installing the electrode assembly 10 inside the case 20, the lead tabs 51 and 52 are first welded to the respective uncoated regions 111 and 121 while the electrode assembly 10 is positioned outside the case, then the retainers 61, 62 are assembled to the respective lead tabs 51 and 52 and then this assembly is inserted into the case 20.

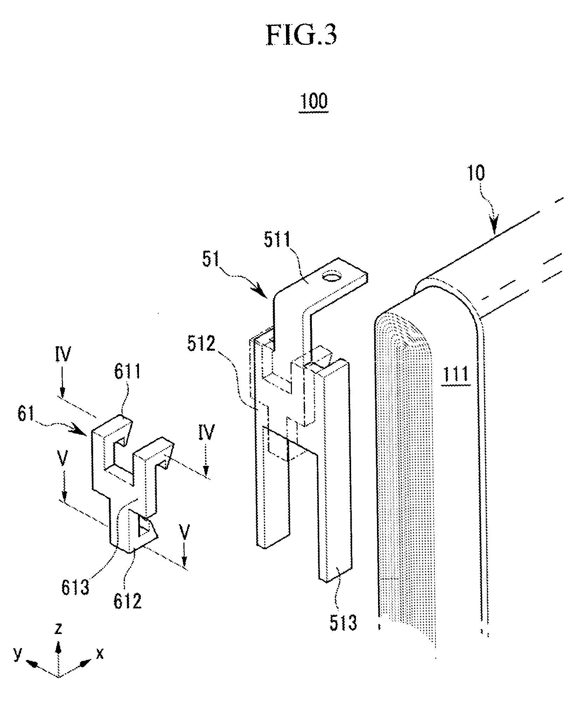

The electrode assembly 10 includes a separator 13 that is an insulator, and an anode 11 and a cathode 12 disposed at both sides of the separator 13, and it is formed in the jelly roll form by winding the anode 11, the cathode 12, and the separator 13. The anode 11 and the cathode 12 include a current collecting part made of thin plate metal foil, and an active material being coated on a surface of the current collecting part. Also, the anode 11 and the cathode 12 can be divided into a coated region in which an active material is coated on the current collecting part, and uncoated regions 111 and 121 without an active material coated on the current collecting part. The coated region forms the major part of the anode 11 and the cathode 12 in the electrode assembly 10 (the major part preferably extends over more than 80%), and the uncoated regions 111 and 121 are disposed on both sides of the coated region in a jelly-roll state of the electrode assembly 10 where the anode 11, the cathode 12 and the separator 13 are formed in a jelly roll shape. For example, the electrode assembly 10 in the jelly roll state forms an area with a wide front and rear, and the ends of the uncoated regions 111 and 121 form a narrow and long area (refer to FIG. 3), wherein the electrode assembly 10 is substantially a hexahedron.

The case 20 forms the overall appearance of the rechargeable battery 100, and is formed of a conductive metal such as aluminum, an aluminum alloy, or nickel-plated steel. Preferably, the conductive metal has an electrical conductivity (at 20°C) of more than 10⁴ S/m, more preferably more than 10⁵ S/m, more preferably more than 10⁶ S/m, more preferably more than 10⁷ S/m and still more preferably more than 3*10⁷ S/m.

Referring to FIG. 1 and FIG. 2, the case 20 provides a space for housing the electrode assembly 10. For example, the case 20 can be configured to be a hexahedron having an opening at one end so as to house the electrode assembly 10 that is hexahedral. The opening is oriented toward the top in the drawing. Preferably, the case has planar side surfaces. Preferably, the case has a cuboid shape.

The cap plate 30 is made of a thin plate, and is combined with the opening of the case 20 to close and seal the opening. The cap plate 30 blocks the inside of the closed and sealed case 20 from the outside, and can also connect the inside and the outside if needed. For example, the cap plate 30 includes an electrolyte injection hole 32 through which an electrolyte is injected inside the closed and sealed case 20. The electrolyte injection hole 32 is sealed by a sealing cap 33 after the electrolyte is injected. Also, the cap plate 30 has a vent hole 35, and has a vent plate 34 that is thinner than the cap plate 30 and welded in the vent hole 35. The vent plate 34 is opened to discharge gas and prevent explosion of the rechargeable battery 100 when the internal pressure of the case 20 is increased to be greater than a predetermined value by gas that is generated by charging and discharging the electrode assembly 10.

The electrode terminals 41 and 42 are installed in the terminal holes 311 and 312 formed in the cap plate 30, and draw out the anode 11 and the cathode 12 of the electrode assembly 10. For example, the electrode terminals 41 and 42 are electrically insulated from the cap plate 30 since they are installed in the terminal holes 311 and 312 by providing external insulators 431 and 432 and internal insulators 441 and 442. Since the terminal holes 311 and 312, the internal insulators 441 and 442, and the external insulators 431 and 432 can be formed in a like configuration at the two electrode terminals 41 and 42, the end electrode terminal 41, the terminal hole 311, the internal insulator 441, and the external insulator 431 will be exemplarily described.

The external insulator 431 is partially inserted into the terminal hole 311 from the external side of the cap plate 30 to electrically insulate the electrode terminal 41 and the cap plate 30. That is, the external insulator 431 insulates the external side of the electrode terminal 41 and the external side of the cap plate 30, and simultaneously insulates the external side of the electrode terminal 41 and the internal side of the terminal hole 311. The internal insulator 441 electrically insulates the cap plate 30 and the lead tab 51 corresponding to the terminal hole 311 inside the cap plate 30. That is, the internal insulator 441 insulates the top side of the lead tab 51 and the inside of the cap plate 30.

FIG. 3 shows an exploded perspective view of a retainer 61, a lead tab 51, and an electrode assembly 10. The uncoated regions 111 and 121 and the retainers 61, 62 in the uncoated regions 111 and 121 are identically formed at the anode 11 and the cathode 12. Hence, only a part of the uncoated region 111 on the anode 11 is illustrated in Fig. 3, and the uncoated region 111 on the anode 11 will be exemplified. Since the uncoated region 111 is continuously wound, the end of the uncoated region 111 forms lines that are gradually increased from the same center line. That is, the lines at the end of the uncoated region 111 form a straight line unit that are formed as straight lines in the z-axis direction and are overlapped (or stacked) in the y-axis direction, and an arc portion is formed as a semicircle or as a semi-oval at both ends of the straight line unit in the z-axis direction and is overlapped in the z-axis direction.

The lead tab 51 includes a connector 511 connected to the electrode terminal 41, a body 512 connected to the connector 511 and facing the end of the uncoated region 111 of the electrode assembly 10, and a current collector 513 connected to the body 512 and welded to both sides of the uncoated region 111. For example, the connector 511 can be connected to the electrode terminal 41 by a caulking process which is inserting one end of the electrode terminal 41 into a hole of the connector 511 and transforming the end of the electrode terminal 41, and is provided between the cap plate 30 and the electrode assembly 10. The body 512 is connected to the connector 511 that is bent in the vertical direction from the horizontal direction to reach the end of the uncoated region 111, and is provided between the end of the uncoated region 111 and the case 20. The current collector 513 is formed to be on a plane corresponding to the front surface and the rear surface of the uncoated region 111 so as to be attached and welded to the surface of the uncoated region 111, and is provided between the front surface and the rear surface of the uncoated region 111 and the case 20.

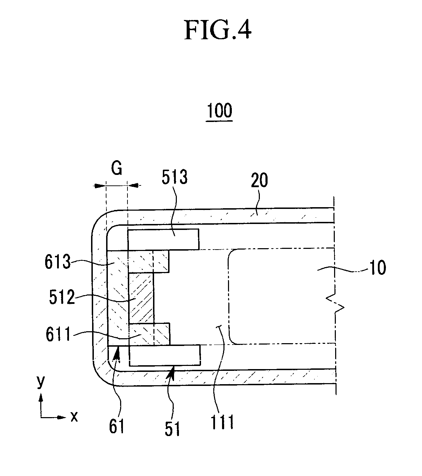

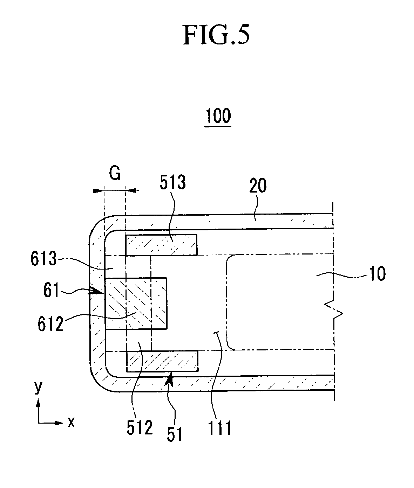

FIG. 4 shows a cross-sectional view with respect to a IV-IV line in FIG. 3, and FIG. 5 shows a cross-sectional view with respect to a V-V line in FIG. 3. Referring to FIG. 3, FIG. 4, and FIG. 5, the retainer 61 is disposed at a gap G that is set between the lead tab 51 and the inner wall of the case 20 facing each other, and fixes the position of the electrode assembly 10 in the case 20. That is, the gap G between the lead tab 51 and the inner wall of the case 20 is filled with the retainer 61. Therefore, the retainer 61 prevents the electrode assembly 10 from moving along the x-axis direction in the case 20. As a result, durability to vibration of the electrode assembly 10 in the case 20 is improved, and the electric insulating property between the case 20 and the uncoated region 111 or between the case 20 and the lead tab 51 is improved.

In detail, the retainer 61 is installed in the body 512 of the lead tab 51, and is provided between the body 512 and the case 20. For example, the retainer 61 includes a buffer 613 attached to the body 512, a first hook 611 connected to the buffer 613 and hooked on the top of the body 512, and a second hook 612 connected to the buffer 613 and hooked on the bottom of the body 512. The first hook 611 is configured as a pair hooked on the top of the body 512 at both bottom sides of the connector 511. That is, the retainer 61 is stably installed at 3 points in the body 512 of the lead tab 51 by the first and second hooks 611 and 612.

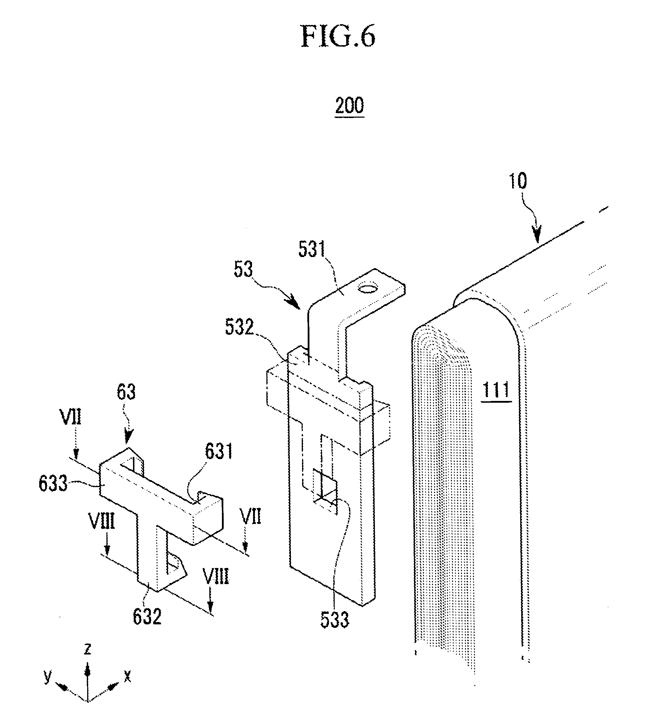

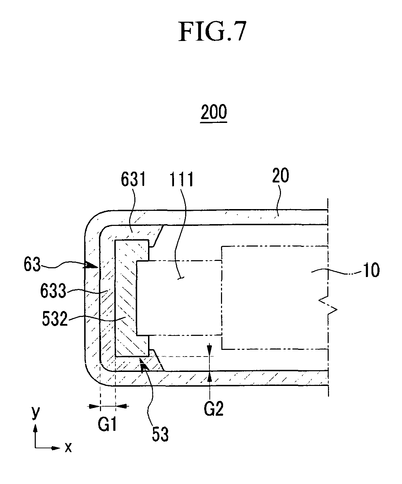

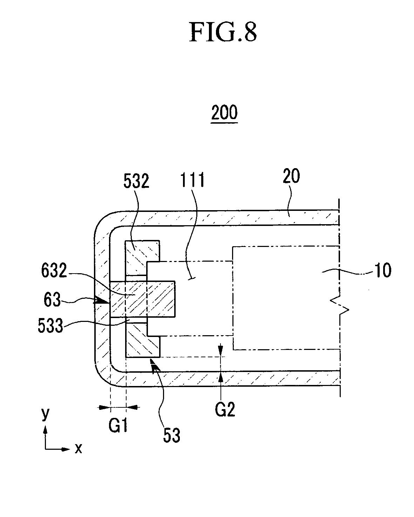

FIG. 6 shows an exploded perspective view of a retainer, a lead tab, and an electrode assembly in a rechargeable battery according to a second exemplary embodiment of the present invention, FIG. 7 shows a cross-sectional view with respect to a VII-VII line in FIG. 6, and FIG. 8 shows a cross-sectional view with respect to a VIII-VIII line in FIG. 6.

Referring to FIG. 6, FIG. 7, and FIG. 8, in a rechargeable battery 200 according to the second exemplary embodiment, a lead tab 53 includes a connector 531 connected to the electrode terminal 41 and a current collector 532 connected to the connector 531 and welded at the end of the uncoated region 111 of the electrode assembly 10. For example, the connector 531 can be connected to the electrode terminal 41 by a caulking process, and is provided between the cap plate 30 and the electrode assembly 10. The current collector 532 is connected to the connector 531 that is bent in the vertical direction from the horizontal direction to reach the end of the uncoated region 111, and is provided between the end of the uncoated region 111 and the case 20.

A retainer 63 is disposed at the gap G1 that is set between the lead tab 53 and the inner wall of the case 20 facing each other, and fixes the position of the electrode assembly 10 in the case 20. That is, the gap G1 between the lead tab 53 and the inner wall of the case 20 is filled with the retainer 63. Therefore, the retainer 63 prevents the electrode assembly 10 from moving along the x-axis direction in the case 20. As a result, durability to vibration of the electrode assembly 10 in the case 20 is improved, and the electric insulating property between the case 20 and the uncoated region 111 or between the case 20 and the lead tab 53 is improved.

In detail, the retainer 63 is installed in the current collector 532 of the lead tab 53, and is provided between of the current collector 532 and the case 20. For example, the retainer 63 includes a buffer 633 attached to the current collector 532, a first hook 631 connected to the buffer 633 and hooked on the side of the current collector 532, and a second hook 632 connected to the buffer 633 and hooked in an installing hole 533 of the current collector 532. The first hook 631 is configured as a pair hooked on the current collector 532 at both sides of the current collector 532. That is, the retainer 63 is stably installed at 3 points in the current collector 532 of the lead tab 53 by the first and second hooks 631 and 632. In this instance, the first hook 631 is provided between both sides of the current collector 532 and the case 20 (refer to FIG. 7), and the second hook 632 is provided between the current collector 532 and the case 20 (refer to FIG. 8).

Compared to the retainer 61 according to the first exemplary embodiment, the retainer 63 according to the second exemplary embodiment is filled as the buffer 633 in the gap G1 that is set between the current collector 532 facing the end of the uncoated region 111 and the inner wall of the case 20, and is simultaneously filled as the first hook 631 in the gap G2 that is set between both ends of the current collector 532 facing the surface of the uncoated region 111 and the inner wall of the case 20 (front and rear side of the case) to thereby fix the position of the electrode assembly 10 in the case 20. That is, the retainer 63 prevents the electrode assembly 10 from moving in the x-axis and y-axis direction in the case 20. Hence, durability to vibration by the electrode assembly 10 in the case 20 is improved, and the electric insulating property between the case 20 and the uncoated region 111 or between the case 20 and the lead tab 53 is improved.

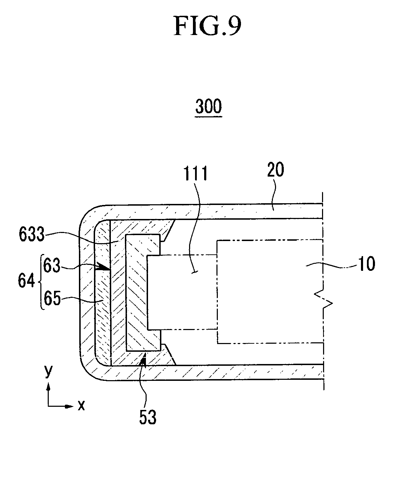

FIG. 9 shows a cross-sectional view of a rechargeable battery according to a third exemplary embodiment of the present invention. Referring to FIG. 9, in a rechargeable battery 300 according to the third exemplary embodiment, a retainer 64 further includes a buffer member 65 between a buffer 633 of the retainer 63 according to the second exemplary embodiment and the inside of the case 20. For example, the buffer member 65 can be formed with a foaming resin, a spring, or an elastic member. The rechargeable battery 300 according to the third exemplary embodiment discloses a configuration of the retainer 64 which is given by further adding the buffer member 65 to the retainer 63 compared to the second exemplary embodiment, and it is also possible to further apply a buffer member to the buffer 613 of the retainer 61 according to the first exemplary embodiment. Due to the elasticity of the buffer member 65, durability to vibration of the electrode assembly in the case is further improved, and also the electric insulating property between the case and the uncoated region or between the case and the lead tab is improved. Preferably, elasticity of the buffer is higher than the elasticity of the other components of the retainer.

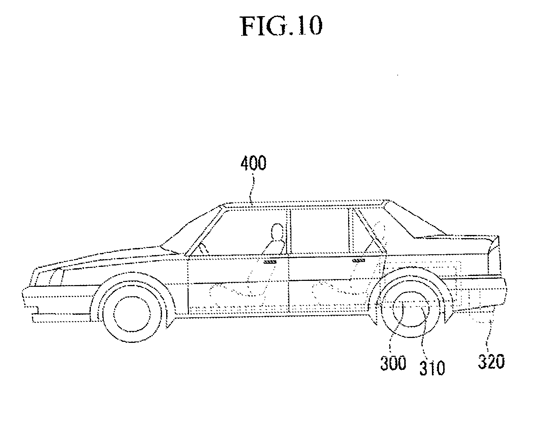

FIG. 10 shows a schematic diagram of a vehicle including a rechargeable battery according to an embodiment of the present invention. The vehicle may be, e.g., a hybrid electric vehicle, and all-electric vehicle, etc. The vehicle may include a power source that provides a motive power for the vehicle, as well as the rechargeable battery 300 described above. The rechargeable batteries 100 and 200 described above may be similarly used. A plurality of rechargeable batteries may be configured as a battery pack that provides electricity to and/or receives electricity from the power source. The rechargeable battery 300 may be housed in a housing 310, which may include a vent 320 to release gases, provide air flow to the rechargeable battery 300, etc.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A rechargeable battery (100, 200, 300) comprising:
at least one electrode assembly (10);
a case (20) accommodating the at least one electrode assembly (10), the case (20) comprising a front surface, a rear surface and side surfaces;
at least one electrode terminal (41, 42) being electrically connected to the at least one electrode assembly (10) by at least one lead tab (51, 52),
wherein a retainer (61, 62, 63, 64) is joined to the at least one lead tab (51, 52) and disposed between the at least one lead tab (51, 52) and an inner wall of at least one of the front surface, the rear surface and the side surfaces of the case (20),
**characterized in that**
each of the at least one lead tab (51, 52) comprises a connector (511) directly connected to the electrode terminal (41); and/or a body (512) connected to the connector (511) and facing the end portion of the uncoated region (111) of the electrode assembly (10); and/or a current collector (513, 532) connected to the body (512) or the connector; and
wherein the retainer (61, 62, 63, 64) comprises a buffer (613, 633) attached to the lead tab (51), a first hook (611, 631) and a second hook (612, 632) extended from the buffer (613, 633) and hooked on at least one of the connector (511), the body (512) and the current collector (513, 532) of the lead tab (51).

2. The rechargeable battery of claim 1, wherein the retainer (61, 62, 63, 64) directly contacts both, the inner wall of at least one of the front surface, the rear surface and the side surfaces of the case (20) and the at least one lead tab (51, 52).

3. The rechargeable battery according to any one of the preceding claims, wherein the retainer (61, 62, 63, 64) comprises an insulating material that electrically insulates the inner wall of the case (20) from the lead tab (51, 52).

4. The rechargeable battery according to any one of the preceding claims, wherein the retainer (61, 62, 63) is a monolithic unit formed of an insulating material.

5. The rechargeable battery according to any one of the preceding claims, wherein the electrode assembly (10) comprises an anode (11), a cathode (12) and a separator (13) disposed therebetween, each of the anode (11) and the cathode (12) comprising a current collecting part comprising a coated region in which an active material is coated on the current collecting part, and an uncoated region (111, 121) in which no active material is coated on the current collecting part, and further comprising a first electrode terminal (41) and a second electrode terminal (42) are provided, wherein the first electrode terminal (41) is directly connected to a first lead tab (51), and the first lead tab (51) is directly connected to the uncoated region (111) of the anode (11), wherein the second electrode terminal (42) is directly connected to a second lead tab (52), and the second lead tab (52) is directly connected to the uncoated region (121) of the cathode (12), and wherein a first retainer (61) is interposed between the first lead tab (51) and an inner wall of the case (20) and a second retainer (62) is interposed between the second lead tab (52) and an inner wall of the case (20).

6. The rechargeable battery according to claim 5, wherein the current collector (513) is welded to both sides of the uncoated region (111) of the electrode assembly (10).

7. The rechargeable battery according to claim 6, wherein the buffer (613) is attached to the body (512) of the lead tab (51), the first hook (611) is hooked on the top of the body (512) of the lead tab (51), and the second hook (612) is connected to the buffer (613) and hooked on the bottom of the body (512) of the lead tab (51).

8. The rechargeable battery according to claim 7, wherein the first hook (611) is configured as a pair hooked on the top of the body (512) of the lead tab (51) at both bottom sides of the connector (511).

9. The rechargeable battery according to claim 5, wherein the body (532) is formed as a current collector, connected to the connector (531) and welded at the end portion of the uncoated region (111) of the electrode assembly (10); wherein an installing hole (533) is formed in the current collector (532).

10. The rechargeable battery according to claim 9, wherein the buffer (633) is attached to the current collector (532) of the lead tab (53), the first hook (631) is connected to the buffer (633) and hooked on a side portion of the current collector (532), and the second hook (632) is connected to the buffer (633) and hooked in the installing hole (533) of the current collector (532).

11. The rechargeable battery according to claim 10, wherein the first hook (631) is configured as a pair hooked on the current collector (532) at both sides of the current collector (532).

12. The rechargeable battery according to any one of claims 5 to 11, wherein a distance between opposite inner side walls of the case (20), which are in direct contact with the first retainer (61) and the second retainer (62), respectively, is equal to the sum of the distances between a side portion of the uncoated region (111) of the anode (11) and a side portion of the uncoated region (121) of the cathode (12), the thickness of the body (512, 532) of the first lead tab (51, 53), the thickness of the body of the second lead tab (52, 62), the thickness of the buffer (613, 633) of the first retainer (61, 63) and the thickness of the buffer of the second retainer (62).

13. The rechargeable battery according to any one of the preceding claims, wherein a first thickness of the retainer (61, 62, 63, 64) along a first direction extending from a first side surface of the case (20) to a second side surface of the case (20) is equal to a gap between the at least one lead tab (51, 52) and an inner wall of one of the side surfaces of the case (20) and/or wherein a second thickness of the retainer (61, 62, 63, 64) along a second direction extending from the front surface of the case (20) to the rear surface of the case (20) is equal to a gap between the at least one lead tab (51, 52) and an inner wall of one of the front surface and the rear surface of the case (20).

14. The rechargeable battery according to any one of claims 5 to 11, further comprising an additional buffer member (65) formed of an elastic material between a buffer (633) of each of the first and second retainer (61, 62, 63) and the inside of the case (20), wherein a distance between opposite inner side walls of the case (20), which are in direct contact with the first retainer (61) and the second retainer (62), respectively, is equal to the sum of the distances between a side portion of the uncoated region (111) of the anode (11) and a side portion of the uncoated region (121) of the cathode (12), the thickness of the body (512, 532) of the first lead tab (51, 53), the thickness of the body of the second lead tab (52, 62), the thickness of the buffer (613, 633) of the first retainer (61, 63) and the thickness of the buffer of the second retainer (62), the thickness of the additional buffer member (65) formed between the buffer (633) of the first retainer (61) the inside of the case (20) and the thickness of the additional buffer member (65) formed between the buffer of the second retainer (62) the inside of the case (20).

15. A vehicle comprising the rechargeable battery (100, 200, 300) according to any one of claims 1 to 14.

## Patentansprüche

1. Wiederaufladbare Batterie (100, 200, 300), aufweisend:
zumindest eine Elektrodenanordnung (10);
ein Gehäuse (20), das die zumindest eine Elektrodenanordnung (10) aufnimmt, wobei das Gehäuse (20) eine Vorderfläche, eine Rückfläche und Seitenflächen aufweist;
zumindest einen Elektrodenanschluss (41, 42), der durch zumindest einen Leitungsstreifen (51, 52) mit der zumindest einen Elektrodenanordnung (10) elektrisch verbunden ist,
wobei eine Haltevorrichtung (61, 62, 63, 64) mit dem zumindest einen Leitungsstreifen (51, 52) verbunden ist und zwischen dem zumindest einen Leitungsstreifen (51, 52) und einer Innenwand der Vorderfläche und/oder der Rückfläche und/oder der Seitenflächen des Gehäuses (20) angeordnet ist,
**dadurch gekennzeichnet, dass**
jeder des zumindest einen Leitungsstreifens (51, 52) einen Verbinder (511), der mit dem Elektrodenanschluss (41) direkt verbunden ist; und/oder einen Körper (512), der mit dem Verbinder (511) verbunden ist und dem Endabschnitt des unbeschichteten Bereichs (111) der Elektrodenanordnung (10) zugewandt ist; und/oder einen Stromkollektor (513, 532), der mit dem Körper (512) des Verbinders verbunden ist, aufweist; und
wobei die Haltevorrichtung (61, 62, 63, 64) einen Puffer (613, 633), der an dem Leitungsstreifen (51) befestigt ist, einen ersten Haken (611, 631) und einen zweiten Haken (612, 632) aufweist, die sich vom Puffer (613, 633) erstrecken und auf dem Verbinder (511) und/oder dem Körper (512) und/oder dem Stromkollektor (513, 532) des Leitungsstreifens (51) festgehakt sind.

2. Wiederaufladbare Batterie nach Anspruch 1, wobei die Haltevorrichtung (61, 62, 63, 64) sowohl mit der Innenwand der Vorderfläche und/oder der Rückfläche und/oder den Seitenflächen des Gehäuses (20) als auch mit dem zumindest einen Leitungsstreifen (51, 52) direkt in Kontakt steht.

3. Wiederaufladbare Batterie nach einem der vorhergehenden Ansprüche, wobei die Haltevorrichtung (61, 62, 63, 64) ein Isoliermaterial aufweist, das die Innenwand des Gehäuses (20) elektrisch von dem Leitungsstreifen (51, 52) isoliert.

4. Wiederaufladbare Batterie nach einem der vorhergehenden Ansprüche, wobei die Haltevorrichtung (61, 62, 63) eine aus einem Isoliermaterial ausgebildete monolithische Einheit ist.

5. Wiederaufladbare Batterie nach einem der vorhergehenden Ansprüche, wobei die Elektrodenanordnung (10) eine Anode (11), eine Kathode (12) und einen zwischen diesen angeordneten Separator (13) aufweist, wobei die Anode (11) und die Kathode (12) jeweils einen Stromkollektorteil aufweisen, der einen beschichteten Bereich, in dem ein aktives Material auf dem Stromkollektorteil aufgebracht ist, und einen unbeschichteten Bereich (111, 121), in dem kein aktives Material auf dem Stromkollektorteil aufgebracht ist, aufweist, und weiterhin aufweisend einen ersten Elektrodenanschluss (41) und einen zweiten Elektrodenanschluss (42), die bereitgestellt werden, wobei der erste Elektrodenanschluss (41) mit einem ersten Leitungsstreifen (51) direkt verbunden ist und der erste Leitungsstreifen (51) mit dem unbeschichteten Bereich (111) der Anode (11) direkt verbunden ist, wobei der zweite Elektrodenanschluss (42) mit einem zweiten Leitungsstreifen (42) direkt verbunden ist und der zweite Leitungsstreifen (52) mit dem unbeschichteten Bereich (121) der Kathode (12) direkt verbunden ist, und wobei eine erste Haltevorrichtung (61) zwischen dem ersten Leitungsstreifen (51) und einer Innenwand des Gehäuses (20) angeordnet ist und eine zweite Haltevorrichtung (62) zwischen dem zweiten Leitungsstreifen (52) und einer Innenwand des Gehäuses (20) angeordnet ist.

6. Wiederaufladbare Batterie nach Anspruch 5, wobei der Stromkollektor (513) mit beiden Seiten des unbeschichteten Bereichs (111) der Elektrodenanordnung (10) verschweißt ist.

7. Wiederaufladbare Batterie nach Anspruch 6, wobei der Puffer (613) am Körper (512) des Leitungsstreifens (51) befestigt ist, der erste Haken (611) auf der Oberseite des Körpers (512) des Leitungsstreifens (51) festgehakt ist und der zweite Haken (612) mit dem Puffer (613) verbunden ist und auf der Unterseite des Körpers (512) des Leitungsstreifens (51) festgehakt ist.

8. Wiederaufladbare Batterie nach Anspruch 7, wobei der erste Haken (611) als ein Paar konfiguriert ist, das auf der Oberseite des Körpers (512) des Leitungsstreifens (51) auf beiden Unterseiten des Verbinders (511) festgehakt ist.

9. Wiederaufladbare Batterie nach Anspruch 5, wobei der Körper (532) als Stromkollektor ausgebildet ist, der mit dem Verbinder (531) verbunden ist und am Endabschnitt des unbeschichteten Bereichs (111) der Elektrodenanordnung (10) angeschweißt ist; wobei ein Installationsloch (533) im Stromkollektor (532) ausgebildet ist.

10. Wiederaufladbare Batterie nach Anspruch 9, wobei der Puffer (633) am Stromkollektor (532) des Leitungsstreifens (53) befestigt ist, der erste Haken (631) mit dem Puffer (633) verbunden ist und auf einem Seitenabschnitt des Stromkollektors (532) festgehakt ist und der zweite Haken (632) mit dem Puffer (633) verbunden ist und im Installationsloch (533) des Stromkollektors (532) festgehakt ist.

11. Wiederaufladbare Batterie nach Anspruch 10, wobei der erste Haken (631) als ein Paar konfiguriert ist, das auf dem Stromkollektor (532) auf beiden Seiten des Stromkollektors (532) festgehakt ist.

12. Wiederaufladbare Batterie nach einem der Ansprüche 5 bis 11, wobei ein Abstand zwischen gegenüberliegenden inneren Seitenwänden des Gehäuses (20), die jeweils mit der ersten Haltevorrichtung (61) und der zweiten Haltevorrichtung (62) in direktem Kontakt stehen, gleich der Summe der Abstände zwischen einem Seitenabschnitt des unbeschichteten Bereichs (111) der Anode (11) und einem Seitenabschnitt des unbeschichteten Bereichs (121) der Kathode (12), der Dicke des Körpers (512, 532) des ersten Leitungsstreifens (51, 53), der Dicke des Körpers des zweiten Leitungsstreifens (52, 62), der Dicke des Puffers (613, 633) der ersten Haltevorrichtung (61, 63) und der Dicke des Puffers der zweiten Haltevorrichtung (62) ist.

13. Wiederaufladbare Batterie nach einem der vorhergehenden Ansprüche, wobei eine erste Dicke der Haltevorrichtung (61, 62, 63, 64) entlang einer ersten Richtung, die sich von einer ersten Seitenfläche des Gehäuses (20) zu einer zweiten Seitenfläche des Gehäuses (20) erstreckt, gleich einer Lücke zwischen dem zumindest einen Leitungsstreifen (51, 52) und einer Innenwand einer der Seitenflächen des Gehäuses (20) ist und/oder wobei eine zweite Dicke der Haltevorrichtung (61, 62, 63, 64) entlang einer zweiten Richtung, die sich von der Vorderfläche des Gehäuses (20) zur Rückfläche des Gehäuses (20) erstreckt, gleich einer Lücke zwischen dem zumindest einen Leitungsstreifen (51, 52) und einer Innenwand der Vorderfläche oder der Rückfläche des Gehäuses (20) ist.

14. Wiederaufladbare Batterie nach einem der Ansprüche 5 bis 11, weiterhin aufweisend eine zusätzliches Pufferglied (65), das aus einem elastischen Material zwischen einem Puffer (633) jeweils der ersten und zweiten Haltevorrichtung (61, 62, 63) und dem Inneren des Gehäuses (20) ausgebildet ist, wobei ein Abstand zwischen gegenüberliegenden Innenwänden des Gehäuses (20), die jeweils mit der ersten Haltevorrichtung (61) und der zweiten Haltevorrichtung (62) in direktem Kontakt stehen, gleich der Summe der Abstände zwischen einem Seitenabschnitt des unbeschichteten Bereichs (111) der Anode (11) und einem Seitenabschnitt des unbeschichteten Bereichs (121) der Kathode (12), der Dicke des Körpers (512, 532) des ersten Leitungsstreifens (51, 53), der Dicke des Körpers des zweiten Leitungsstreifens (52, 62), der Dicke des Puffers (613, 633) der ersten Haltevorrichtung (61, 63) und der Dicke des Puffers der zweiten Haltevorrichtung (62), der Dicke des zusätzlichen Puffergliedes (65), das zwischen dem Puffer (633) der ersten Haltevorrichtung (61) das Innere des Gehäuses (20) ausgebildet ist, und der Dicke des zusätzlichen Puffergliedes (65), das zwischen dem Puffer und der zweiten Haltevorrichtung (62) das Innere des Gehäuses (20) ausgebildet ist, ist.

15. Fahrzeug, das die wiederaufladbare Batterie (100, 200, 300) nach einem der Ansprüche 1 bis 14 aufweist.

## Revendications

1. Batterie rechargeable (100, 200, 300), comprenant :
au moins un assemblage d'électrodes (10) ;
un boîtier (20) recevant ledit au moins un assemblage d'électrodes (10), le boîtier (20) comprenant une surface antérieure, une surface postérieure et des surfaces latérales ;
au moins une borne d'électrode (41, 42) connectée électriquement audit au moins un assemblage d'électrodes (10) par au moins une fiche conductrice (51, 52),
dans laquelle un élément d'arrêt (61, 62, 63, 64) est joint à ladite au moins une fiche conductrice (51, 52) et est disposé entre ladite au moins une fiche conductrice (51, 52) et une paroi intérieure d'au moins une de la surface antérieure, de la surface postérieure et des surfaces latérales du boîtier (20),
**caractérisée en ce que**
chacune de ladite au moins une fiche conductrice (51, 52) comprend un connecteur (511) connecté directement à la borne d'électrode (41) ; et/ou un corps (512) connecté au connecteur (511) et faisant face à la partie terminale de la région non revêtue (111) de l'assemblage d'électrodes (10) ; et un collecteur de courant (513, 532) connecté au corps (512) ou au connecteur ; et où
l'élément d'arrêt (61, 62, 63, 64) comprend un tampon (613, 633) fixé à la fiche conductrice (51), un premier crochet (611, 631), un second crochet (612, 632) s'étendant à partir du tampon (613, 633) et accrochés sur au moins du connecteur (511), du corps (512) et du conducteur de courant (513, 532) de la fiche conductrice (51).

2. Batterie rechargeable suivant la revendication 1, dans laquelle l'élément d'arrêt (61, 62, 63, 64) entre en contact directement à la fois avec la paroi intérieure d'au moins une de la surface antérieure, de la surface postérieure et des surfaces latérales du boîtier (20) et avec ladite au moins une fiche conductrice (51, 52).

3. Batterie rechargeable suivant l'une quelconque des revendications précédentes, dans laquelle l'élément d'arrêt (61, 62, 63, 64) comprend un matériau isolant qui isole électriquement la paroi intérieure du boîtier (20) de la fiche conductrice (51, 52).

4. Batterie rechargeable suivant l'une quelconque des revendications précédentes, dans laquelle l'élément d'arrêt (61, 62, 63) est une unité monolithique formée d'un matériau isolant.

5. Batterie rechargeable suivant l'une quelconque des revendications précédentes, dans laquelle l'assemblage d'électrodes (10) comprend une anode (11), une cathode (12) et un séparateur (13) disposé entre ces électrodes, chacune de l'anode (11) et de la cathode (12) comprenant une partie collectrice de courant comprenant une région revêtue dans laquelle une matière active a été appliquée sous forme de revêtement sur la partie collectrice de courant, et une région non revêtue (111, 121) dans laquelle aucune matière active n'a été appliquée sous forme d'un revêtement sur la partie collectrice de courant, et comprenant en outre une première borne d'électrode (41) et une seconde borne d'électrode (42), ladite première borne d'électrode (41) étant connectée directement à une première fiche conductrice (51), et la première fiche conductrice (51) étant connectée directement à la région non revêtue (111) de 1"anode (11), la seconde borne d'électrode (42) étant connectée directement à une seconde fiche conductrice (52) et la seconde fiche conductrice (52) étant connectée directement à la région non revêtue (121) de la cathode (12), et un premier élément d'arrêt (61) étant interposé entre la première fiche conductrice (51) et une paroi intérieure du boîtier (20), et un second élément d'arrêt (62) étant interposé entre la seconde fiche conductrice (52) et une paroi intérieure du boîtier (20).

6. Batterie rechargeable suivant la revendication 5, dans laquelle le collecteur de courant (513) est soudé aux deux côtés de la région non revêtue (111) de l'assemblage d'électrodes (10).

7. Batterie rechargeable suivant la revendication 6, dans laquelle le tampon (613) est fixé au corps (512) de la fiche conductrice (51), le premier crochet (611) est accroché à la partie supérieure du corps (512) de la fiche conductrice (51) et le second crochet (612) est connecté au tampon (613) et est accroché à la partie inférieure du corps (512) de la fiche conductrice (51).

8. Batterie rechargeable suivant la revendication 7, dans laquelle le premier crochet (611) est configuré sous forme d'une paire accrochée à la partie supérieure du corps (512) de la fiche conductrice (51) des deux côtés inférieurs du connecteur (513).

9. Batterie rechargeable suivant la revendication 5, dans laquelle le corps (532) est formé comme un collecteur de courant, connecté au connecteur (531) et soudé au niveau de la partie terminale de la région non revêtue (111) de l'assemblage d'électrodes (10) ; un trou d'installation (533) étant formé dans le collecteur de courant (532).

10. Batterie rechargeable suivant la revendication 9, dans laquelle le tampon (633) est fixé au collecteur de courant (532) de la fiche conductrice (53), le premier crochet (631) est connecté au tampon (633) et est accroché sur une partie latérale du collecteur de courant (532) et le second crochet (632) est connecté au tampon (633) et est accroché dans le trou d'installation (533) du collecteur de courant (532).

11. Batterie rechargeable suivant la revendication 10, dans laquelle le premier crochet (631) est configuré sous forme d'une paire accrochée sur le collecteur du courant (532) des deux côtés du collecteur de courant (532).

12. Batterie rechargeable suivant l'une quelconque des revendications 5 à 11, dans laquelle la distance entre les parois latérales intérieures opposées du boîtier (20) qui sont en contact direct avec le premier élément d'arrêt (61) et le second élément d'arrêt (62), respectivement, est égal à la somme des distances entre une partie latérale de la région non revêtue (111) de l'anode (11) et une partie latérale de la région non revêtue (121) de la cathode (12), de l'épaisseur du corps (512, 532) de la première fiche conductrice (51, 53), de l'épaisseur du corps de la seconde fiche conductrice (52, 62), de l'épaisseur du tampon (613, 633) du premier élément d'arrêt (61, 63) et de l'épaisseur du tampon du second élément d'arrêt (62).

13. Batterie rechargeable suivant l'une quelconque des revendications précédentes, dans laquelle une première épaisseur de l'élément d'arrêt (61, 62, 63, 64) le long d'une première direction s'étendant d'une première surface latérale du boîtier (20) et une seconde surface latérale du boîtier (20) est égal à un intervalle entre ladite au moins une fiche conductrice (51, 52) et une paroi intérieure d'une des surfaces latérales du boîtier (20) et/ou dans laquelle une seconde épaisseur de l'élément d'arrêt (61, 62, 63, 64) le long d'une seconde direction s'étendant de la surface antérieure du boîtier (20) à la surface postérieure du boîtier (20) est égale à l'intervalle entre ladite au moins une fiche conductrice (51, 52) et une paroi intérieure de la surface antérieure et de la surface postérieure du boîtier (20).

14. Batterie rechargeable suivant l'une quelconque des revendications 5 à 11, comprenant en outre un élément tampon supplémentaire (65) formé d'une matière élastique entre un tampon (633) de chacun des premier et second éléments d'arrêt (61, 62, 63) et l'intérieur du boîtier (20), dans laquelle une distance entre les parois latérales intérieures opposées du boitier (20) qui sont en contact direct avec le premier élément d'arrêt (61) et le second élément d'arrêt (62), respectivement, est égale à la somme des distances entre une partie latérale de la région non revêtue (111) de l'anode (11) et une partie latérale de la région non revêtue (121) de la cathode (12), de l'épaisseur du corps (512, 532) de la première fiche conductrice (51, 53), de l'épaisseur du corps de la seconde fiche conductrice (52, 62), de l'épaisseur du tampon (613, 633) du premier élément d'arrêt (61, 63) et de l'épaisseur du tampon du second élément d'arrêt (62), de l'épaisseur de l'élément tampon supplémentaire (65) formé entre le tampon (633) du premier élément d'arrêt (61) et l'intérieur du boîtier (20) et de l'épaisseur de l'élément tampon supplémentaire (65) formé entre le tampon du second élément d'arrêt (62) et l'intérieur du boîtier (20).

15. Véhicule comprenant la batterie rechargeable (100, 200, 300) suivant l'une quelconque des revendications 1 à 14.
